(19) Europäisches Patentamt / European Patent Office / Office européen des brevets

(11) **EP 2 656 475 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **11808624.8**

(22) Anmeldetag: **19.12.2011**

(51) Int Cl.:
*B60L 58/22* *(2019.01)* *H02J 7/00* *(2006.01)*

(86) Internationale Anmeldenummer:
**PCT/EP2011/073209**

(87) Internationale Veröffentlichungsnummer:
**WO 2012/084799 (28.06.2012 Gazette 2012/26)**

(54) **VERFAHREN UND VORRICHTUNG ZUM BETREIBEN EINES ENERGIESPEICHERS**

METHOD AND DEVICE FOR OPERATING AN ENERGY STORE

PROCÉDÉ ET DISPOSITIF PERMETTANT DE FAIRE FONCTIONNER UN ACCUMULATEUR D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010063971**

(43) Veröffentlichungstag der Anmeldung:
**30.10.2013 Patentblatt 2013/44**

(73) Patentinhaber: **Bayerische Motoren Werke Aktiengesellschaft**
**80809 München (DE)**

(72) Erfinder:
• **von GROLL, Max, Dr.**
**Mountain View 940433543 (US)**
• **BOHLEN, Oliver, Dr.**
**80687 München (DE)**
• **DELBONO, Elvis**
**80809 München (DE)**

(56) Entgegenhaltungen:
| | |
|---|---|
| EP-A1- 2 254 219 | EP-A1- 2 254 219 |
| JP-A- 2004 031 254 | JP-A- 2007 143 373 |
| JP-A- 2007 143 373 | JP-A- 2007 244 142 |
| JP-A- 2007 244 142 | US-A1- 2002 011 820 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 656 475 B1

**Beschreibung**

Die Erfindung betrifft ein Verfahren und eine Vorrichtung zum Betreiben eines Energiespeichers mit zumindest einem Energiespeichermodul, das mehrere Energiespeicherzellen aufweist.

Aufgrund einer geringen CO2-Emission nimmt das Interesse an batteriebetriebenen Fahrzeugen, insbesondere an Fahrzeugen mit Hybridantrieb, sehr stark zu. Fahrzeuge mit Hybridantrieb weisen im Vergleich zu konventionellen Fahrzeugen einen zusätzlichen Energiespeicher auf, in welchem zurückgewonnene Energie abgespeichert werden kann. Für die Funktion von batteriebetriebenen Fahrzeugen und Hybridfahrzeugen spielt die Leistungsfähigkeit des Energiespeichers eine wesentliche Rolle. Moderne Hochvoltbatterien für Hybrid- und Batteriefahrzeuge weisen eine Vielzahl von in Serie geschalteten Energiespeicherzellen auf. Die Leistungsfähigkeit dieser Batterien mit mehreren in Serie geschalteten Energiespeicherzellen ergibt sich aus der Summe der Leistungsfähigkeit der einzelnen Energiespeicherzellen. Durch produktionsbedingte Herstellungstoleranzen der Energiespeicherzellen und/oder Temperaturunterschiede in dem Energiespeicher können Energiespeicherzellen über die Zeit unterschiedliche Ladezustände aufweisen. Infolgedessen sinkt über die Zeit ein nutzbarer Energiehub und reduziert sich die Leistungsfähigkeit des Energiespeichersystems.

EP 2 254 219 A1 offenbart eine Vorrichtung, die den Ladezustand einer Vielzahl von in Reihe geschalteten Zellen ausgleicht, die eine zusammengebaute Batterie bilden. Die Vor richtung umfasst eine Steuerschaltung und eine Entladeschaltung zum Entladen sämtlicher Zellen. Die Steuerschaltung umfasst eine Einrichtung, die für jede zu entladende Zelle mittels einem von einem Ausgleichszielwert verschiedenen Ladezustandsbewertungswert eine Entladezeit oder einen Entladungsendwert ableitet.

JP 2007 244142 A offenbart eine Steuervorrichtung für eine Gruppe von Zellen eines Energiespeichers, die in der Lage ist, ein Zellgleichgewicht zu halten, selbst wenn sich eine jeweilige Restkapazität von Sekundärzellen, die eine Gruppe von Zellen bilden, stark ändert.

JP 2004 031254 A offenbart ein Batteriepack, bei dem mehrere parallele Schaltungen, die jeweils mehrere Zellen parallel verbinden, in Reihe geschaltet sind. Es wird die Spannung jeder parallelen Schaltung erfasst und die Ladekapazität jeder Parallelschaltung, die der erfassten Spannung entspricht, wird aus einer Ruhespannungskennlinie, die für die Zellen charakteristisch ist, abgerufen. Die niedrigste Ladekapazität der Ladekapazitäten der Parallelschaltungen wird als Kapazitätssteuerbefehl eingestellt. Die Entladekapazität jeder Parallelschaltung aus der Abweichung der Ladekapazität jeder Parallelschaltung wird von dem Kapazitätssteuerbefehl berechnet. Die zweite Ableitung f"(SOC) wird aus der Ruhespannungskennlinie der Zellen abgeleitet. Die Entladungskapazität jeder Parallelschaltung wird auf der Grundlage des zweiten Differenzialkoeffizienten der Ruhespannungskennlinie.

US 2002/011820 A1 offenbart ein Verfahren und eine Vorrichtung zur Anpassung von Ladekapazität in einem Batteriepack.

Die Aufgabe, die der Erfindung zugrunde liegt, ist, ein Verfahren und eine Vorrichtung zum Betreiben eines Energiespei chers zu schaffen, das beziehungsweise die einen Beitrag leistet, den Energiespeicher zuverlässig zu betreiben.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren und eine korrespondierende Vorrichtung zum Betreiben eines Energiespeichers mit zumindest einem Energiespeichermodul, das mehrere Energiespeicherzellen aufweist. Die Energiespeicherzellen sind jeweils elektrisch gekoppelt mit einer Überwachungseinheit. Die jeweilige Überwachungseinheit ist ausgebildet, in einem aktiven Betriebszustand die Energiespeicherzelle mit einem vorgegebenen Symmetriestrom zu entladen. Das Verfahren umfasst hierbei folgende Schritte: Eine Ruhespannung der jeweiligen Energiespeicherzelle wird erfasst und eine Entladezeitdauer für die jeweilige Energiespeicherzelle ermittelt abhängig von dem vorgegebenen Symmetriestrom, von der Ruhespannung der Energiespeicherzelle und von einem vorgegebenen Zielentladespannungswert. Des Weiteren wird die jeweilige Überwachungseinheit angesteuert zum Entladen der jeweiligen Energiespeicherzelle mit dem vorgegebenen Symmetriestrom für die der jeweiligen Energiespeicherzelle zugeordneten Entladezeitdauer.

Ferner wird die Entladezeitdauer abhängig von einer vorgegebenen Steigung einer Ruhespannungscharakteristik der Energiespeicherzelle ermittelt, wobei die Ruhespannungscharakteristik einen Verlauf der Ruhespannung der Energiespeicherzelle abhängig von einem Ladezustand der Energiespeicherzelle beschreibt. Die Entladezeitdauer wird zusätzlich abhängig von einem Betriebsstrom der Überwachungseinheit, den sie der Energiespeicherzelle während einer Wachphase entnimmt, wobei die Wachphase eine Zeitdauer repräsentiert, während der die Überwachungseinheit den aktiven und/oder einen passiven Betriebszustand aufweist. In dem aktiven Betriebszustand entlädt die Überwachungseinheit die Energiespeicherzelle mit dem Symmetriestrom und dem Betriebsstrom und in dem passiven Betriebszustand entlädt die Überwachungseinheit die Energiespeicherzelle mit dem Betriebsstrom. Des Weiteren wird die Entladezeit abhängig von einer maximalen Zellenspannung für das jeweilige Energiespeichermodul ermittelt, wobei die maximale Zellspannung ermittelt wird abhängig von den Ruhespannungen der jeweiligen Energiespeicherzellen des Energiespeichermoduls.

Dies ermöglicht mit geringem Rechenaufwand eine geeignete Steuergröße zu ermitteln, mittels derer eine Zellladezustandssymmetrie herbeigeführt werden kann. Vorteilhafterweise können dadurch Ladezustandsabweichung minimiert werden und eine maximale Leistungsfähigkeit des Energiespeichers erreicht werden. Durch produktionsbedingte Herstellungstoleranzen der Energiespeicherzellen und/oder Temperaturunterschiede in dem Energiespeicher und/oder aufgrund einer Streuung einer Stromaufnahme der Überwachungseinheiten können die Energiespeicherzellen über die Zeit unterschiedliche Ladezustände aufweisen. Abhängig von einem Aufbau und der verwendeten Materialien weisen die Energiespeicherzellen beispielsweise eine vorgegebenen Ruhespannungscharakteristik auf mit einer Hysterese. Die Ruhespannungscharakteristik beschreibt hierbei einen Verlauf einer Ruhespannung einer Energiespeicherzelle abhängig von einem Ladezustand der Energiespeicherzelle. Weist die Ruhespannungscharakteristik eine Hysterese auf, ist beispielsweise die Ruhespannung der Energiespeicherzelle, die sich nach einer längeren Zeit während einer Ruhephase eines Kraftfahrzeugs einstellt, beispielsweise nach längeren Ladephasen, größer als nach längeren Entladephasen. Beispielsweise können lithiumbasierte Energiespeicher, die in modernen Hybrid- und Batteriefahrzeugen eingesetzt werden, solch eine Hysterese aufweisen. Die Ruhespannung kann während einer längeren Ruhephase des Kraftfahrzeugs erfasst werden, beispielsweise nach einer längeren Entladephase oder Ladephase des Energiespeichers. In diesem Fall kann die erfasste Ruhespannung einer Entladekennlinie oder einer Ladekennlinie der Ruhespannungscharakteristik zugeordnet werden und somit beispielsweise auch ein Ladezustand der Energiespeicherzelle ermittelt werden. Vorteilhafterweise ist ein Überwachen einer Zellspannung der jeweiligen Energiespeicherzelle während einer Symmetrisierungsphase nicht notwendig. Die Zellladezustandssymmetrie kann unabhängig von einer Hysterese der Ruhespannungscharakteristik der Energiespeicherzelle herbeigeführt werden. Die Zellladezustandssymmetrie kann unabhängig von elektrochemisch bedingten Hystereseeigenschaften der Energiespeicherzellen herbeigeführt werden. Die Zellladezustandssymmetrie kann auch für den Fall herbeigeführt werden, bei dem das jeweilige Energiespeichermodul eine sehr große Ladezustandsdifferenz zwischen den Energiespeicherzellen aufweist. Die Überwachungseinheit, mit der die jeweilige Energiespeicherzelle gekoppelt sein kann, kann beispielsweise ausgebildet sein, eine Temperatur und/oder eine Spannung einer Energiespeicherzelle zu erfassen. Des Weiteren kann der Energiespeicher eine zentrale Steuereinheit mit einer Speichereinheit aufweisen, die ausgebildet ist, beispielsweise vorgegebene Zustandsgrößen und/oder Betriebsgrößen des Energiespeichermoduls zu erfassen und/oder beispielsweise die Überwachungseinheiten eines Energiespeichermoduls vorgegeben anzusteuern. Ein zyklisches Aufwachen der Überwachungseinheit und/oder der zentralen Steuereinheit kann einen höheren Strombedarf bedingen. Da die jeweilige Überwachungseinheit zum Entladen der jeweiligen Energiespeicherzelle mit dem vorgegebenen Symmetriestrom für die der jeweiligen Energiespeicherzelle zugeordneten Entladezeitdauer angesteuert wird ist das zyklische Aufwachen der Überwachungseinheit und/oder der zentralen Steuereinheit, beispielsweise während einer längeren Ruhephase des Elektro- oder Hybridfahrzeugs, nicht erforderlich. Des Weiteren kann sich dadurch eine Lebensdauer der zentralen Steuereinheit mit der Speichereinheit erhöhen, da ein zyklisches Erfassen und Abspeichern der jeweiligen Zellenspannung nicht erforderlich ist. Das zyklische Erfassen und Abspeichern der jeweiligen Zellenspannung kann es erforderlich machen, dass Speicher der Speichereinheit sehr häufig beschrieben werden. Dies kann sich nachteilig auf eine Lebensdauer der Speicher, die beispielsweise als Non-Volatile-Random-Access-Speicher ausgebildet sind, auswirken. Das Entladen der Speicherzellen kann während eines beliebigen Betriebszustandes des Energiespeichers beziehungsweise des Elektro- oder Hybridfahrzeugs erfolgen, beispielsweise während einer Fahrt des Elektro- oder Hybridfahrzeugs oder während einer Ladephase des Energiespeichers. Beispielsweise kann die Symmetrisierungsphase während einer Transportphase begonnen werden und ohne Spannungsversorgung der zentralen Steuereinheit erfolgen. Das Entladen der Energiespeicherzellen kann zeitlich unabhängig von dem Erfassen der Ruhespannung erfolgen.

Weist der Energiespeicher mehrere Energiespeicherzellen auf, ist es von Vorteil, wenn die Energiespeicherzellen jeweils einen sehr ähnlichen Aufbau hinsichtlich Abmessungen und Materialien aufweisen und damit näherungsweise gleiche elektrische Eigenschaften aufweisen. Beispielsweise kann der Symmetriestrom für alle Energiespeicherzellen gleich gewählt werden.

Der Betriebsstrom kann für sämtliche Überwachungseinheiten gleich sein. Dies ermöglicht, eine passive Entladung der Energiespeicherzelle während der Symmetrisierungsphase zu berücksichtigen. Die Überwachungseinheit kann einen Aus-Betriebszustand aufweisen, der dadurch charakterisiert werden kann, dass der Überwachungseinheit keinerlei Energie zugeführt wird und die Überwachungseinheit keinerlei Funktionen ausführt. Des Weiteren kann die Überwachungseinheit einen passiven Betriebszustand aufweisen. Der passive Betriebszustand kann dadurch charakterisiert werden, dass der Überwachungseinheit der Betriebsstrom zugeführt wird und die Überwachungseinheit betriebsbereit ist zu einer Ausführung einer vorgegebenen Funktion, insbesondere zum Entladen einer Energiespeicherzelle. Ferner kann die Überwachungseinheit einen aktiven Betriebszustand aufweisen, der dadurch charakterisiert werden kann, dass der Überwachungseinheit der Betriebsstrom zugeführt wird und die Überwachungseinheit die vorgegebene Funktion, insbesondere das Entladen der jeweiligen Energiespeicherzelle mit dem Symmetriestrom, ausführt.

Die Überwachungseinheit der Energiespeicherzelle kann derart ausgebildet sein und/oder angesteuert werden, dass die Überwachungseinheit in der Symmetrisierungsphase einen passiven Betriebszustand aufweist während eine oder mehrere der Energiespeicherzellen des Energiespeichermoduls, das die Energiespeicherzelle umfasst, aktiv entladen werden mit dem vorgegebenen Symmetriestrom. Dies bedeutet, dass die Energiespeicherzelle, die nicht aktiv entladen wird, trotzdem mit dem Betriebsstrom entladen wird. Eine Zeitdauer, während der die Überwachungseinheit der Energiespeicherzelle einen aktiven oder passiven Betriebszustand aufweist und somit die Energiespeicherzelle aktiv und/oder passiv entlädt, kann daher abhängig sein von der maximalen Zellspannung des Energiespeichermoduls, dem diese Überwachungseinheit zugeordnet ist.

Gemäß einer weiteren vorteilhaften Ausgestaltung wird die Steigung abhängig von einem erfassten Ladezustand der Energiespeicherzelle ermittelt.

Gemäß einer weiteren vorteilhaften Ausgestaltung wird der Zielentladespannungswert ermittelt abhängig von den für eine vorgegebene erste Anzahl von Energiespeicherzellen erfassten Ruhespannungen. Die erste Anzahl kann beispielsweise gleich der Gesamtanzahl der Energiespeicherzellen sein, die der Energiespeicher aufweist.

Gemäß einer weiteren vorteilhaften Ausgestaltung wird jeweils eine minimale Ruhespannung für das jeweilige Energiespeichermodul ermittelt abhängig von den Ruhespannungen der jeweiligen Energiespeicherzellen dieses Energiespeichermoduls. Des Weiteren wird eine Zellentladespannung für das jeweilige Energiespeichermodul ermittelt abhängig von der minimalen Ruhespannung des jeweiligen Energiespeichermoduls. Des Weiteren wird der Zielentladespannungswert ermittelt abhängig von den ermittelten Zellentladespannungen einer zweiten Anzahl von Energiespeichermodulen. Beispielsweise kann die vorgegebene zweite Anzahl von Energiespeichermodulen gleich einer Gesamtanzahl von Energiespeichermodulen sein, die der Energiespeicher aufweist.

Gemäß einer weiteren vorteilhaften Ausgestaltung wird die Zellentladespannung für das jeweilige Energiespeichermodul ermittelt abhängig von der maximalen Zellspannung des Energiespeichers.

Gemäß einer weiteren vorteilhaften Ausgestaltung wird die Zellentladespannung für das jeweilige Energiespeichermodul ermittelt abhängig von einem Verhältnis des Symmetriestroms zu dem Betriebsstrom.

Ausführungsbeispiele und Ausgestaltungen der Erfindung sind im Folgenden anhand schematischer Zeichnungen näher erläutert. Es zeigen:

Figur 1      eine erste Modelldarstellung eines Energiespeichers,

Figur 2      eine zweite Modelldarstellung des Energiespeichers,

Figur 3      eine Modelldarstellung zu einer Symmetrisierung der Energiespeicherzellen,

Figur 4      ein Zeitdiagramm,

Figur 5      ein Ablaufdiagramm für ein Programm zum Betreiben des Energiespeichers,

Figur 6      einen Verlauf des Ladezustands von mehreren Energie-speicherzellen während der Symmetrisierungsphase,

Figur 7      den Ladezustands von mehreren Energiespeicherzellen am Ende der Symmetrisierungsphase und

Figur 8      einen weiteren Verlauf des Ladezustands von mehreren Energiespeicherzellen nach der Symmetrisierungsphase.

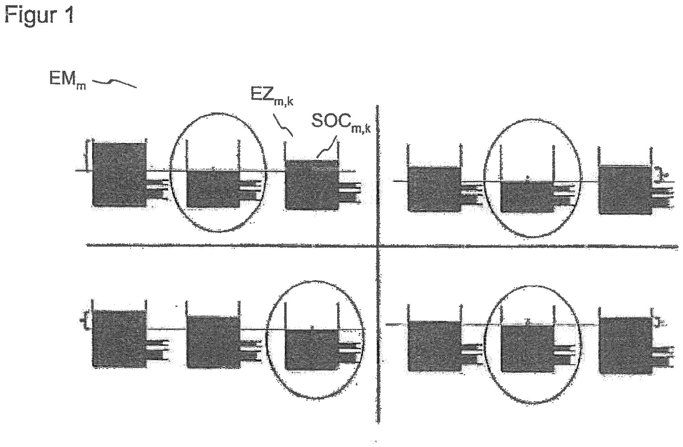

Figur 1 zeigt eine Modelldarstellung eines Energiespeichers. Der Energiespeicher weist mehrere Energiespeichermodule $EM_m$ auf, beispielsweise vier Energiespeichermodule $EM_m$. Jedes Energiespeichermodul $EM_m$ umfasst mehrere Energiespeicherzellen $EZ_{m,z}$, beispielsweise drei Energiespeicherzellen $EZ_{m,z}$. Vorzugsweise umfasst jedes Energiespeichermodul $EM_m$ eine gleiche Anzahl von Energiespeicherzellen $EZ_{m,z}$, die bezüglich Material und Aufbautechnik ähnlich ausgebildet sind. Die Energiespeicherzellen $EZ_{m,z}$ weisen zumindest zum Teil verschiedene Ladezustände auf.

Die jeweilige Energiespeicherzelle $EZ_{m,z}$ ist jeweils elektrisch gekoppelt mit einer Überwachungseinheit, die ausgebildet ist, die jeweilige Energiespeicherzelle $EZ_{m,z}$ mit einem vorgegebenen Symmetriestrom $I_S$ zu entladen. Der Symmetriestrom $I_S$ ist vorzugsweise für alle Überwachungseinheiten näherungsweise gleich groß, insbesondere gleich groß. Der Symmetriestrom $I_S$ hat beispielsweise näherungsweise 60 mA.

Die Überwachungseinheit weist beispielsweise einen schaltbaren Widerstand auf. Wenn beispielsweise der schaltbare Widerstand eine erste Schaltstellung aufweist, kann die zugehörige Energiespeicherzelle $EZ_{m,z}$ über diesen Widerstand entladen werden. Wenn der schaltbare Widerstand beispielsweise eine zweite Schaltstellung aufweist, kann die zugehörige Energiespeicherzelle $EZ_{m,z}$ nicht über diesen Widerstand entladen werden.

Die Überwachungseinheit kann in einem aktiven und einem passiven Betriebszustand einen vorgegebenen Betriebsstrom $I_{SG}$ benötigen, den sie vorzugsweise der zugehörigen Energiespeicherzelle $EZ_{m,z}$ entnimmt. Der Betriebsstrom $I_{SG}$ hat beispielsweise näherungsweise 25 mA. Der aktive Betriebszustand der Überwachungseinheit kann dadurch charakterisiert werden, dass die Überwachungseinheit den vorgegebenen Betriebsstrom $I_{SG}$ der zugehörigen Energiespeicherzelle $EZ_{m,z}$ entnimmt und der schaltbare Widerstand die erste Schaltstellung aufweist, sodass die Überwachungseinheit die Energiespeicherzelle $EZ_{m,z}$ aktiv mit dem vorgegebenen Symmetriestrom $I_S$ entlädt. Der passive Betriebszustand der Überwachungseinheit kann dadurch charakterisiert werden, dass die Überwachungseinheit den vorgegebenen Betriebsstrom $I_{SG}$ der zugehörigen Energiespeicherzelle $EZ_{m,z}$ entnimmt, jedoch der schaltbare Widerstand die zweite Schaltstellung aufweist, sodass die Energiespeicherzelle $EZ_{m,z}$ nicht aktiv entladen wird mit dem Symmetriestrom $I_S$.

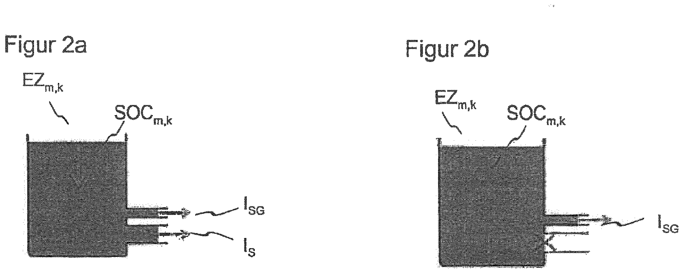

In einem aktiven Betriebszustand entlädt die Überwachungseinheit die Energiespeicherzelle $EZ_{m,z}$ mit dem Symmetriestrom $I_S$ und dem Betriebsstrom $I_{SG}$ (Figur 2a). Während die Überwachungseinheit einen aktiven Betriebszustand aufweist, wird die zugehörige Energiespeicherzelle $EZ_{m,z}$ aktiv entladen. In einem passiven Betriebszustand entlädt die Überwachungseinheit die Energiespeicherzelle $EZ_{m,z}$ mit dem Betriebsstrom $I_{SG}$ (Figur 2b). Während die Überwachungseinheit einen passiven Betriebszustand aufweist, wird die zugehörige Energiespeicherzelle $EZ_{m,z}$ passiv entladen. Eine Zeitdauer, während der die Überwachungseinheit einen aktiven und/oder einen passiven Betriebszustand aufweist, kann als Wachzeit T_wach,m der Überwachungseinheit bezeichnet werden.

Die jeweiligen Überwachungseinheiten können derart ausgebildet sein, dass ein Entladen zumindest einer der Energiespeicherzellen $EZ_{m,z}$ des Energiespeichermoduls $EM_m$ erfordert, dass während einer Zeitdauer des Entladens der zumindest einen Energiespeicherzellen $EZ_{m,z}$ alle Überwachungseinheiten den aktiven Betriebszustand und/oder den passiven Betriebszustand aufweisen.

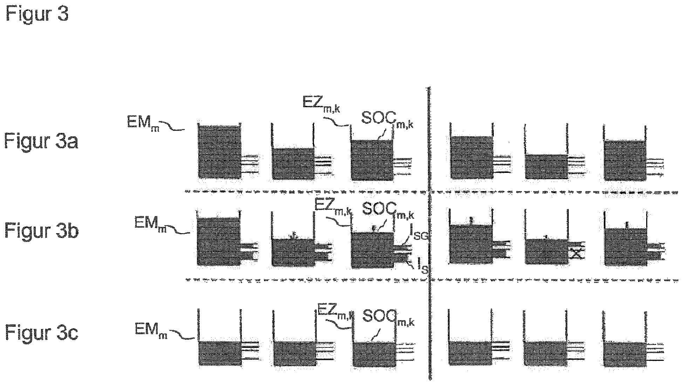

Figur 3 veranschaulicht eine Entladung der Energiespeicherzelle $EZ_{m,z}$ während einer Symmetrisierungsphase. Vor der Symmetrisierungsphase (Fig. 3a) weisen die Energiespeicherzellen $EZ_{m,z}$ zumindest teilweise unterschiedliche Ladezustände auf.

Während der Symmetrisierungsphase (Fig. 3b) werden, insoweit nicht alle Energiespeicherzellen $EZ_{m,z}$ des jeweiligen Energiespeichermoduls $EM_m$ einen minimalen Ladezustand aufweisen, alle Energiespeicherzellen $EZ_{m,z}$ des Energiespeichermoduls $EM_m$ jeweils aktiv und/oder passiv entladen.

Nach Abschluss der Symmetrisierungsphase (Fig. 3c) weisen alle Energiespeicherzellen $EZ_{m,z}$ des Energiespeichers näherungsweise einen gleichen Ladezustand, insbesondere den gleichen Ladezustand, auf.

Die Entladung der Energiespeicherzelle $EZ_{m,z}$ mit einem höchsten Ladezustand erfordert eine gewisse Zeitdauer. Während dieser Zeitdauer wird auch die Energiespeicherzelle $EZ_{m,z}$ des Energiespeichermoduls $EM_m$, die einen geringsten Ladezustand aufweist, passiv und/oder aktiv entladen.

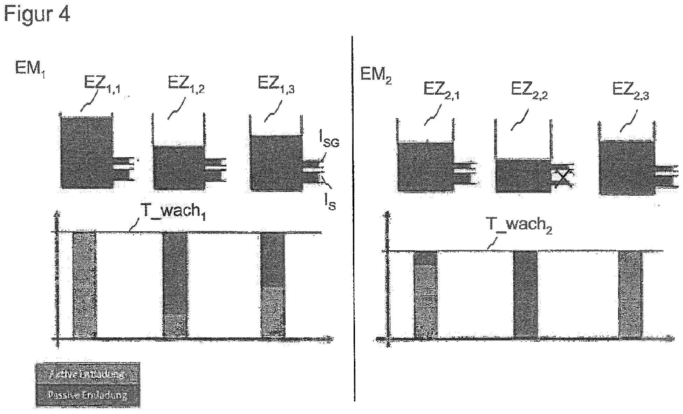

Figur 4 zeigt jeweils ein Zeitdiagramm für ein erstes und ein zweites Energiespeichermodul $EM_m$. Die Überwachungseinheiten des ersten Energiespeichermoduls $EM_m$ weisen eine erste Wachzeit T_wach,1 auf und die Überwachungseinheiten des zweiten Energiespeichermoduls $EM_m$ weisen eine zweite Wachzeit T_wach,2 auf. Die erste Wachzeit T_wach,1 und die zweite Wachzeit T_wach,2 sind unterschiedlich groß. Beispielsweise weisen während der ersten Wachzeit T_wach,1 die Überwachungseinheiten des ersten Energiespeichermoduls $EM_1$ jeweils unterschiedlich lange den aktiven oder den passiven Betriebszustand auf.

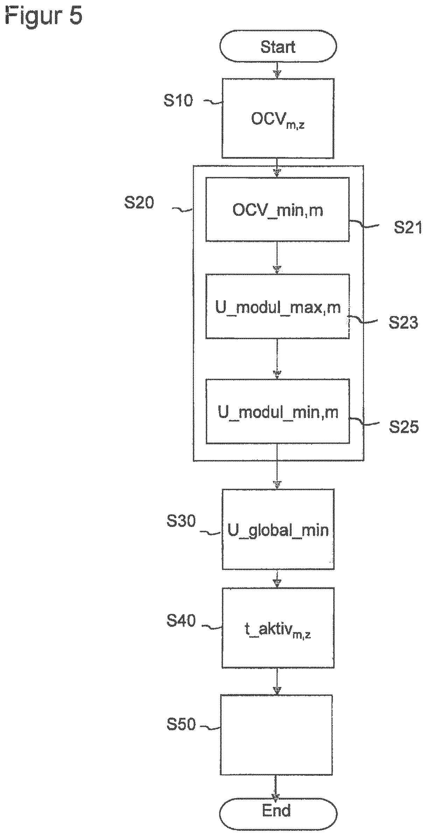

Figur 5 zeigt ein Ablaufdiagramm für ein Programm zum Betreiben des Energiespeichers. Nach einem Start des Programms wird in einem Schritt S10 eine Ruhespannung $OVC_{m,z}$ der jeweiligen Energiespeicherzellen $EZ_{m,z}$ erfasst.

In einem Schritt S20 wird beispielsweise eine Zellentladespannung U_modul_min,m ermittelt. Hierzu wird zum Beispiel in einem Unterprogrammschritt S21 eine minimale Ruhespannung OCV_modul_min,m für das jeweilige Energiespeichermodul $EM_m$ ermittelt abhängig von den Ruhespannungen $OVC_{m,z}$ der jeweiligen Energiespeicherzellen $EZ_{m,z}$ dieses Energiespeichermoduls $EM_m$. Beispielsweise kann die minimale Ruhespannung OCV_modul_min,m des Energiespeichermoduls $EM_m$ gemäß Gl. 1 ermittelt werden:

$$OCV\_\mathrm{mod}ul\_\mathrm{min}, m = \min(OCV_{1,m},...,OCV_{z,m},...,OCV_{Z,m}) \qquad (\mathrm{G1.1})$$

mit z = 1 bis Z, wobei Z beispielsweise die Gesamtanzahl der Energiespeicherzellen $EZ_{m,z}$ des Energiespeichermoduls $EM_m$ repräsentiert.

Des Weiteren wird in einem Unterprogrammschritt S23 eine maximale Zellspannung U_modul_max,m für das Energiespeichermodul $EM_m$ ermittelt abhängig von den Ruhespannungen $OVC_{m,z}$ der jeweiligen Energiespeicherzellen $EZ_{m,z}$ des Energiespeichermoduls $EM_m$. Beispielsweise kann die maximale Zellspannung U_modul_max,m des Energiespeichermoduls $EM_m$ gemäß Gl. 2 ermittelt werden:

$$U\_\mathrm{mod}ul\_\mathrm{max}, m = \max(OCV_{1,m},...,OCV_{z,m},...,OCV_{Z,m}) \qquad (\mathrm{G1.2})$$

mit z = 1 bis Z, wobei Z beispielsweise die Gesamtanzahl der Energiespeicherzellen $EZ_{m,z}$ des Energiespeichermoduls $EM_m$ repräsentiert.

In einem Unterprogrammschritt S25 wird die Zellentladespannung U_modul_min,m für das jeweilige Energiespeichermodul $EM_m$ ermittelt abhängig von der minimalen Ruhespannung OCV_modul_min,m und von der maximalen Zellspannung U_modul_max,m des jeweiligen Energiespeichermoduls $EM_m$ sowie abhängig von dem Verhältnis des Symmetriestroms $I_S$ zu dem Betriebsstrom $I_{SG}$. Beispielsweise kann die Zellentladespannung U_modul_min,m des Energiespeichermoduls $EM_m$ gemäß Gl. 3 ermittelt werden:

$$U\_\mathrm{mod}ul\_\min,m = \left[ -\frac{I_{SG}}{I_S} \cdot (U\_\mathrm{mod}ul\_\max,m - OCV\_\mathrm{mod}ul\_\min,m) \right.$$
$$\left. + OCV\_\mathrm{mod}ul\_\min,m \right] \qquad (Gl.3)$$

In einem Schritt S30 wird beispielsweise der Zielentladespannungswert U_global_min ermittelt abhängig von den ermittelten Zellentladespannungen U_modul_min,m einer zweiten Anzahl M von Energiespeichermodulen $EM_m$. Beispielsweise kann der Zielentladespannungswert U_global_min des Energiespeichermoduls $EM_m$ gemäß Gl. 4 ermittelt werden:

$$\text{U\_global\_min} = \min(\text{U\_modul\_min},1;\dots; \text{U\_modul\_min},m;\dots;$$
$$\text{U\_modul\_min},M),$$
$$(Gl. 4)$$

mit m = 1 bis M, wobei M beispielsweise die Gesamtanzahl der Energiespeichermodule $EM_m$ des Energiespeichers repräsentiert.

In einem Schritt S40 wird beispielsweise eine aktive Entladezeitdauer t_aktiv$_{m,z}$ für die jeweilige Energiespeicherzelle $EZ_{m,z}$ ermittelt abhängig von dem vorgegebenen Symmetriestrom $I_S$, dem vorgegebenen Betriebsstrom $I_{SG}$, einer vorgegebenen Steigung C einer Ruhespannungscharakteristik OCV_SOC der Energiespeicherzelle $EZ_{m,z}$, dem Zielentladespannungswert U_global_min und der maximalen Zellspannung U_modul_max,m des Energiespeichermoduls $EM_m$, das die Energiespeicherzelle $EZ_{m,z}$ umfasst. Beispielsweise kann die Entladezeitdauer t_aktiv$_{m,z}$ der jeweiligen Energiespeicherzelle $EZ_{m,z}$ gemäß Gl. 5 ermittelt werden:

$$t\_aktiv_{m,z} = \frac{U\_global\_\min - OCV_{m,z}}{C \cdot I_S} + \frac{I_{SG}}{I_S} \cdot \frac{U\_\mathrm{mod}ul\_\max,m - U\_global\_\min}{C \cdot (I_S + I_{SG})}$$
$$(Gl.5)$$

In einem Schritt S50 wird beispielsweise die jeweilige Überwachungseinheit zum Entladen der jeweiligen Energiespeicherzelle $EZ_{m,z}$ mit dem vorgegebenen Symmetriestrom $I_S$ für die der jeweiligen Energiespeicherzelle $EZ_{m,z}$ zugeordneten Entladezeitdauer t_aktiv$_{m,z}$ angesteuert.

Eine Vorrichtung zum Betreiben des Energiespeichers kann beispielsweise eine Recheneinheit mit einem Programm- und Datenspeicher aufweisen und ausgebildet sein, das in Figur 5 beschriebene Programm zum Betreiben des Energiespeichers auszuführen. Die Vorrichtung zum Betreiben kann beispielsweise Teil eines zentralen Energiespeicher-Managementsystems sein.

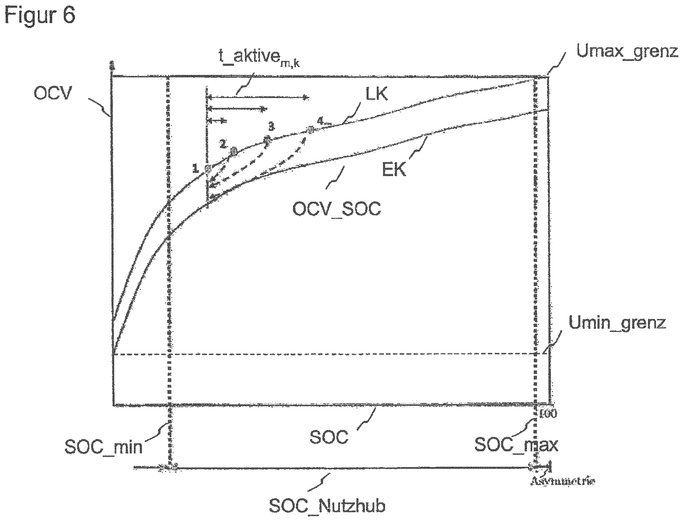

Die Figuren 6 bis 8 zeigen den Verlauf des Ladezustands $SOC_{m,z}$ von mehreren Energiespeicherzellen $EZ_{m,z}$, beispielsweise von 96 Energiespeicherzellen $EZ_{m,z}$, während der Symmetrisierungsphase. Die Energiespeicherzellen $EZ_{m,z}$ weisen jeweils die in Figur 6 gezeigte Ruhespannungscharakteristik OCV_SOC auf. Ein maximaler Ruhespannungsbereich einer Energiespeicherzelle $EZ_{m,z}$ kann begrenzt werden durch eine vorgegebene untere Grenzruhespannung Umin_grenz und eine vorgegebene obere Grenzruhespannung Umax_grenz. Die obere Grenzruhespannung Umax_grenz kann beispielsweise durch einen Hersteller vorgegeben werden.

Die Ruhespannungscharakteristik OCV_SOC weist beispielsweise eine Hysterese mit einer Ladekennlinie LK und eine Entladekennlinie EK auf. Die Ladekennlinie LK charakterisiert die Ruhespannung $OVC_{m,z}$ der Energiespeicherzellen $EZ_{m,z}$ abhängig von dem jeweiligen Ladezustand $SOC_{m,z}$, den die Energiespeicherzelle $EZ_{m,z}$ nach einer längeren Ladephase aufweist. Die Entladekennlinie EK charakterisiert die Ruhespannung $OVC_{m,z}$ der Energiespeicherzellen $EZ_{m,z}$ abhängig von dem Ladezustand $SOC_{m,z}$, die die Energiespeicherzelle $EZ_{m,z}$ nach einer längeren Entladephase aufweist. Beispielsweise weisen die Energiespeicherzellen $EZ_{m,z}$ zu Beginn der Symmetrisierungsphase jeweils alle einen Arbeitspunkt auf, der durch die jeweilige Ruhespannung $OVC_{m,z}$ und dem jeweiligen Ladezustand $SOC_{m,z}$ der Energiespeicherzelle $EZ_{m,z}$ charakterisiert ist, der der Ladekennlinie LK zugeordnet werden kann. Die Energiespeicherzellen $EZ_{m,z}$ können verschiedene Ladezustände und somit auch verschiedene Ruhespannungen aufweisen.

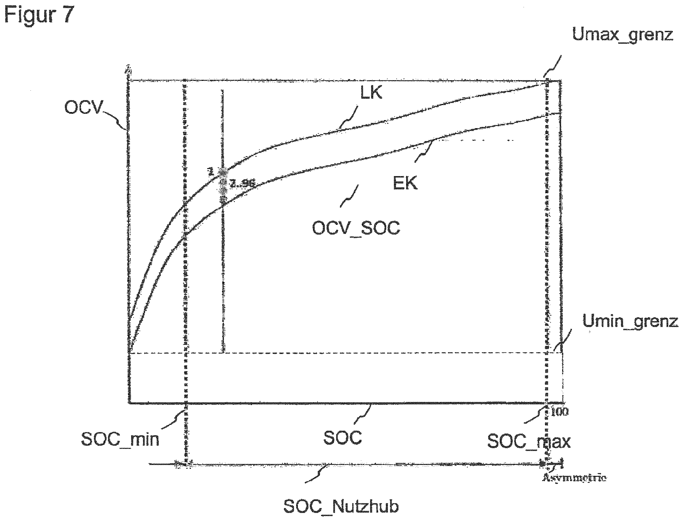

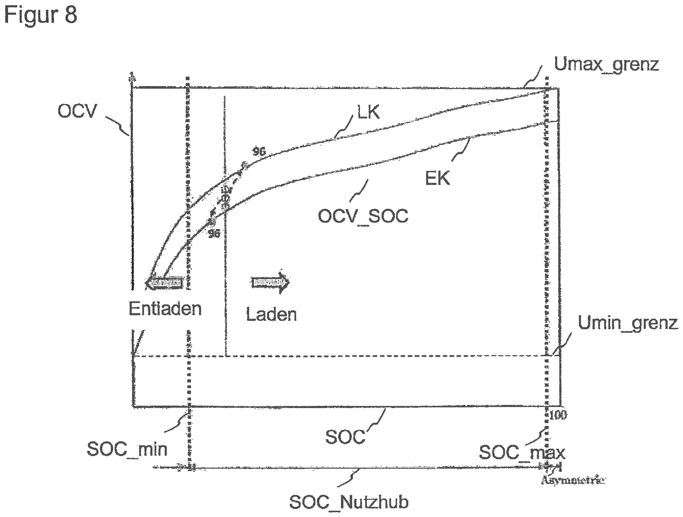

Die Energiespeicherzellen $EZ_{m,z}$ werden jeweils für die der jeweiligen Energiespeicherzelle $EZ_{m,z}$ zugeordneten Entladezeitdauer $t\_aktiv_{m,z}$ aktiv mit dem vorgegebenen Symmetriestrom $I_S$ entladen. Nach dem Entladen der jeweiligen Energiespeicherzellen $EZ_{m,z}$, am Ende der Symmetrisierungsphase, weisen die Energiespeicherzellen $EZ_{m,z}$ jeweils den gleichen Ladezustand auf (Figur 7). Die Symmetrisierung kann somit unabhängig von der Hysterese der Ruhespannungscharakteristik OCV_SOC erfolgen. Die jeweiligen Ruhespannungen $OVC_{m,z}$ können jedoch nach der Symmetrisierung unterschiedlich sein. Die Ruhespannung $OVC_{m,z}$ der jeweiligen Energiespeicherzelle $EZ_{m,z}$ folgt während dem Entladen nicht der Ladekennlinie LK, sondern einer für die jeweilige Energiespeicherzelle $EZ_{m,z}$ spezifischen Zwischenkennlinie, die in Richtung der Entladekennlinie EK verläuft. Nach Abschluss der Symmetrisierungsphase (Figur 8) folgt die Ruhespannung $OVC_{m,z}$ der jeweiligen Energiespeicherzelle $EZ_{m,z}$ der jeweiligen Zwischenkennlinie ZK der Energiespeicherzelle $EZ_{m,z}$ abhängig von einem vorgegebenen Betriebsmodus des Energiespeichers, beispielsweise einem vorgegebenen Entladen des Energiespeichers zur Versorgung elektrischer Verbraucher in ein Fahrzeug oder einem vorgegeben Laden des Energiespeichers.

Im Folgenden ist eine Herleitung der Gleichung für die Entladezeitdauer $t\_aktiv_{m,z}$ angegeben. Für eine aktuelle Spannung der Energiespeicherzelle $EZ_{m,z}$ gilt:

$$(a1) \qquad U(t) = -C \cdot (I_{SG} + I_S) \cdot t + OCV_{m,z}$$

mit

U: aktuelle Spannung der Energiespeicherzelle $EZ_{m,z}$ [V] $OCV_{m,z}$: Ruhespannung der Energiespeicherzelle $EZ_{m,z}$ [V]
C : Steigung der Ruhespannungscharakteristik OCV_SOC [V/(A*min)]. Die Steigung der Ruhespannungscharakteristik OCV_SOC ist nicht konstant, sondern abhängig von dem Ladezustand SOC. Zur Erhöhung der Genauigkeit der Symmetrisierung kann die Steigung C auch vom Ladezustand SOC abhängig ermittelt werden.
$I_{SG}$ = Betriebsstrom [A] der Überwachungseinheit
$I_S$ = Symmetriestrom [A]

Zunächst wird angenommen, dass die Energiespeicherzelle $EZ_{m,z}$ mit einer kleinsten Zellspannung im Energiespeichermodul $EM_m$ nicht aktiv entladen wird. Um die Zellentladespannung U_modul_min,m innerhalb eines Energiespeichermoduls $EM_m$ zu bestimmen, wird zunächst nur die Entladung durch den Betriebsstrom $I_{SG}$ berücksichtigt. Gleichung (a1) wird zu:

$$(a2) \qquad U'_{min}(T'_{wach}) = -C \cdot I_{SG} \cdot T'_{wach} + U_{min}$$

mit

$U_{min}$ = OCV_mdoul_min,m
$T'_{wach}$ = Ausgleichzeit um alle Energiespeicherzelle $EZ_{m,z}$ in dem einen Energiespeichermodul $EM_m$ abzugleichen. Diese Ausgleichzeit ist eine rechnerische Zwischengröße, da die Symmetrisierung innerhalb aller Energiespeichermodule $EM_m$ ausgeführt werden muss.
$U'_{min}$ = U_mod*ul*_min,*m*; Zellentladespannung innerhalb eines Energiespeichermoduls $EM_m$, die eine minimale Zellspannung im Energiespeichermodul $EM_m$ repräsentiert nach der passiven Entladung aufgrund des Betriebstroms der Überwachungseinheit.

Die Energiespeicherzelle $EZ_{m,z}$ mit der größten Zellspannung wird im Energiespeichermodul $EM_m$ für die ganze Ausgleichzeit aktiv entladen. Mit Gleichung (a1) gilt:

$$(a3) \qquad U\_mod{ul}\_min,m(T'_{wach}) = -C \cdot (I_{SG} + I_S) \cdot T'_{wach} + U_{max}$$

Mit $U_{max}$ = U_modul_max,m: maximale Zellspannung des Energiespeichermoduls $EM_m$.
Nach der Ausgleichzeit $T'_{wach}$, haben alle Energiespeicherzellen $EZ_{m,z}$ im Energiespeichermodul $EM_m$ rech-

nerisch die gleiche Spannung. Aus diesem Grund entsprechen die zwei vorherigen Gleichungen dem gleichen Wert. Die Zellentladespannung U_modul_min,m kann mit Gleichung (a2) und (a3) ermittelt werden:

$$(a4) \qquad U\_mod\,ul\_\min, m = -\frac{I_{SG}}{I_S} \cdot (U_{\max} - U_{\min}) + U_{\min}$$

Im Folgenden wird ein globales Minimum, d. h. der Zielentladespannungswert U_global_min, ermittelt. Für den Zielentladespannungswert U_global_min gilt:

$$(a5) \qquad U\_global\_\min = \min(U\_mod\,ul\_\min,1;...;U\_mod\,ul\_\min, M,)$$

Des Weiteren kann die Wachzeit T_wach,m für jede Überwachungseinheit ermittelt werden:

$$(a6) \qquad \Delta U_{SG}(T\_wach,m) = -C \cdot I_{SG} \cdot T\_wach,m$$

Gleichung (a6) definiert für jede Energiespeicherzelle $EZ_{m,z}$ einen rechnerischen Spannungsabfall nach der Symmetrisierung aufgrund des Betriebsstroms $I_{SG}$. Ein rechnerischer gesamter Spannungsabfall jeder Energiespeicherzelle $EZ_{m,z}$ ist abhängig von der Summe der Spannungsabfälle aufgrund der aktiven Entladung und der passiven Entladung.

$$(a7) \qquad U(T_{Ende}) - U(T_0) = \Delta U_{SG} + \Delta U_{aktiveEntl.}$$

Die Spannung am Ende der Symmetrisierung ($T_{Ende}$) ist gleich dem Zielentladespannungswert U_global_min.

$$(a8) \qquad U\_global\_\min - OCV_{m,z} = \Delta U_{SG} + \Delta U_{aktiveEntl.}$$

$$(a9) \qquad \Delta U_{aktiveEntl.} = U\_global\_\min - OCV_{m,z} - \Delta U_{SG}$$

Für den rechnerischen Spannungsabfall aufgrund der aktiven Entladung durch den Symmetriestrom $I_S$ gilt:

$$(a10) \qquad \Delta U_{aktiveEntl.} = -C \cdot I_S \cdot t_{aktiveEntl.}$$

Hierdurch kann eine erste Gleichung für die Entladezeitdauer t_aktiv$_{m,z}$ der jeweiligen Energiespeicherzelle $EZ_{m,z}$ angegeben werden:

$$(a11) \qquad t\_aktive_{m,k} = -\frac{\Delta U_{aktiveEntl.}}{C \cdot I_S}$$

Des Weiteren kann die Wachzeit T_wach,m jeder Überwachungseinheit ermittelt werden. Für jedes Energiespeichermodul $EM_m$ kann die Wachzeit T_wach,m der zugehörigen Überwachungseinheiten abhängig von der größten Entladezeitdauer t_aktiv$_{m,z}$ in dem Energiespeichermodul $EM_m$ ermittelt werden:

$$(a12) \qquad T\_wach,m = \max(t\_akvive_{m,1}, t\_akvive_{m,2},...,t\_akvive_{m,Z})$$

d. h. von der Energiespeicherzelle $EZ_{m,z}$ mit der maximalen Ruhespannung des Energiespeichermoduls $EM_m$.
Mit (a6) und (a9) ergibt sich:

$$(a13) \qquad \Delta U_{aktiveEntl.} = U\_global\_\min - U\_modul\_\max, m + C \cdot I_{SG} \cdot T\_wach, m$$

mit (a13), (a10) und (a12) gilt:

$$(a14) \qquad \max(t_{aktiveEntl}) = T\_wach, m$$

$$= -\frac{U\_global\_\min - U\_modul\_\max, m + C \cdot I_{SG} \cdot T\_wach, m}{C \cdot I_S}$$

$$(a15) \qquad T\_wach, m = \frac{U\_modul\_\max, m - U\_global\_\min}{C \cdot (I_S + I_{SG})}$$

Mit Gleichung (a11), (a13) und (a15) kann die Entladezeitdauer t_aktiv$_{m,z}$ gemäß Gleichung (a16) ermittelt werden:

$$(a16) \qquad t\_active_{m,z} = -\frac{U\_global\_\min - OCV_{m,z} + C \cdot I_{SG} \cdot T\_wach, m}{C \cdot I_S}$$

Bezugszeichenliste

| | |
|---|---|
| EM$_m$ | Energiespeichermodul |
| EZ$_{m,z}$ | Energiespeicherzelle |
| SOC$_{m,z}$ | Ladezustand einer Energiespeicherzelle |
| I$_S$ | Symmetriestrom |
| I$_{SG}$ | Betriebsstrom |
| OCV | Ruhespannung |
| SOC | Ladezustand |
| OVC$_{m,z}$ | Ruhespannung einer Energiespeicherzelle |
| T_wach,m | Wachzeit |
| EM$_1$, | erstes Energiespeichermodul |
| EM$_2$, | zweites Energiespeichermodul |
| EZ$_{1..2,1..3}$ | Energiespeicherzellen des ersten und des zweiten Energiespeichermoduls |
| T_wach,1; T_wach,2 | erste und zweite Wachzeit |
| OCV_SOC | Ruhespannungscharakteristik |
| LK | Ladekennlinie |
| EK | Entladekennlinie |
| Umin_grenz | untere Grenzruhespannung |
| Umas_grenz | obere Grenzruhespannung |
| SOC_min | unterer Grenzladezustand |
| SOC_max | oberer Grenzladezustand |
| SOC_Nutzhub | nutzbarer Ladezustandshub |
| t_aktiv$_{m,z}$ | Entladezeitdauer einer Energiespeicherzelle |
| U_global_min | Zielentladespannungswert |
| U_modul_max,m | maximale Zellspannung eines Energiespeicher-moduls |
| OCV_modul_min,m | minimale Ruhespannung eines Energiespeicher-moduls |
| U_modul_min,m | Zellentladespannung |

**Patentansprüche**

1. Verfahren zum Betreiben eines Energiespeichers mit zumindest einem Energiespeichermodul ($EM_m$), das mehrere Energiespeicherzellen ($EZ_{m,z}$) aufweist, die jeweils elektrisch gekoppelt sind mit einer Überwachungseinheit (CSC), die ausgebildet ist, in einem aktiven Betriebszustand die Energiespeicherzelle ($EZ_{m,z}$) mit einem vorgegebenen Symmetriestrom ($I_S$) zu entladen, bei dem das Verfahren folgende Schritte umfasst:

   - Erfassen einer Ruhespannung ($OCV_{m,z}$) der jeweiligen Energiespeicherzelle ($EZ_{m,z}$),
   - Ermitteln einer Entladezeitdauer (t_aktiv$_{m,z}$) für die jeweilige Energiespeicherzelle ($EZ_{m,z}$) abhängig von

      - - dem vorgegebenen Symmetriestrom (Is),
      - - der Ruhespannung ($OCV_{m,z}$) der Energiespeicherzelle ($EZ_{m,z}$),
      - - einem vorgegebenen Zielentladespannungswert (U_global_min) für den Energiespeicher,
      - - einer vorgegebenen Steigung (C) einer Ruhespannungscharakteristik (OCV SOC) der Energiespeicherzelle ($EZ_{m,z}$), wobei die Ruhespannungscharakteristik (OCV_SOC) einen Verlauf der Ruhespannung ($OCV_{m,z}$) der Energiespeicherzelle ($EZ_{m,z}$) abhängig von einem Ladezustand der Energiespeicherzelle ($EZ_{m,z}$) beschreibt,
      - - einem Betriebsstrom ($I_{SG}$) der Überwachungseinheit (CSC), den sie der Energiespeicherzelle ($EZ_{m,z}$) während einer Wachphase entnimmt, , und
      - - einer maximalen Zellenspannung (U_modul_max,m) für das jeweilige Energiespeichermodul ($EM_m$), wobei die maximale Zellspannung (Umodul max,m) ermittelt wird abhängig von den Ruhespannungen ($OCV_{m,z}$) der jeweiligen Energiespeicherzellen ($EZ_{m,z}$) des Energiespeichermoduls ($EM_m$), und

   - Ansteuern der jeweiligen Überwachungseinheit zum Entladen der jeweiligen Energiespeicherzelle ($EZ_{m,z}$) mit dem vorgegebenen Symmetriestrom (Is) für die der jeweiligen Energiespeicherzelle ($EZ_{m,z}$) zugeordneten Entladezeitdauer (t_aktiv$_{m,z}$).

2. Verfahren nach Anspruch 1, bei dem die Steigung (C) abhängig von einem erfassten Ladezustand ($SOC_{m,z}$) der Energiespeicherzelle ($EZ_{m,z}$) ermittelt wird.

3. Verfahren nach Anspruch einem der vorstehenden Ansprüche, bei dem der Zielentladespannungswert (U_global_min) ermittelt wird abhängig von den für eine vorgegebene erste Anzahl (Z) von Energiespeicherzellen ($EZ_{m,z}$) erfassten Ruhespannungen ($OCV_{m,z}$).

4. Verfahren nach einem der vorstehenden Ansprüche, bei dem

   - jeweils eine minimale Ruhespannung (OCV_modul_min,m) für das jeweilige Energiespeichermodul ($EM_m$) ermittelt wird abhängig von den Ruhespannungen ($OCV_{m,z}$) der jeweiligen Energiespeicherzellen ($EZ_{m,z}$) dieses Energiespeichermoduls ($EM_m$) und
   - eine Zellentladespannung (U_modul_min,m) für das jeweilige Energiespeichermodul ($EM_m$) ermittelt wird abhängig von der minimalen Ruhespannung (OCV_moudul_min,m) des jeweilige Energiespeichermoduls ($EM_m$) und
   - der Zielentladespannungswert (U_global_min) ermittelt wird abhängig von den ermittelten Zellentladespannungen (U_modul_min,m) einer zweiten Anzahl (M) von Energiespeichermodulen ($EM_m$).

5. Verfahren nach Anspruch 4, bei dem die Zellentladespannung (U_modul_min,m) für das jeweilige Energiespeichermodul ($EM_m$) ermittelt wird abhängig von der maximalen Zellspannung (U_moudul_max,m) des Energiespeichermoduls ($EM_m$).

6. Verfahren nach Anspruch 4 oder 5, bei dem die Zellentladespannung (U_modul_min,m) für das jeweilige Energiespeichermodul ($EM_m$) ermittelt wird abhängig von einem Verhältnis des Symmetriestroms (Is) zu dem Betriebsstrom ($I_{SG}$).

7. Vorrichtung zum Betreiben eines Energiespeichers mit zumindest einem Energiespeichermodul ($EM_m$), das mehrere Energiespeicherzellen ($EZ_{m,z}$) aufweist, die jeweils elektrisch gekoppelt sind mit einer Überwachungseinheit, die ausgebildet ist, in einem aktiven Betriebszustand der Überwachungseinheit die Energiespeicherzelle ($EZ_{m,z}$) mit einem vorgegebenen Symmetriestrom (Is) zu entladen, wobei die Vorrichtung ausgebildet ist, das Verfahren nach einem der Ansprüche 1 bis 6 auszuführen.

**Claims**

1. Method for operating an energy store comprising at least one energy storage module ($EM_m$) which has a plurality of energy storage cells ($EZ_{m,z}$) which are each electrically coupled to a monitoring unit (CSC) which is designed to discharge the energy storage cell ($EZ_{m,z}$) with a predefined symmetrical current ($I_S$) in an active operating state, in which the method comprises the following steps:

    - detecting an open-circuit voltage ($OCV_{m,z}$) of the respective energy storage cell ($EZ_{m,z}$),
    - determining a discharge time duration (t_aktiv$_{m,z}$) for the respective energy storage cell ($EZ_{m,z}$) depending on

        - - the predefined symmetrical current (Is),
        - - the open-circuit voltage ($OCV_{m,z}$) of the energy storage cell ($EZ_{m,z}$),
        - - a predefined target discharge voltage value (U_global_min) for the energy store,
        - - a predefined gradient (C) of an open-circuit voltage characteristic (OCV_SOC) of the energy storage cell ($EZ_{m,z}$), wherein the open-circuit voltage characteristic (OCV_SOC) describes a profile of the open-circuit voltage ($OCV_{m,z}$) of the energy storage cell ($EZ_{m,z}$) depending on a state of charge of the energy storage cell ($EZ_{m,z}$),
        - - an operating current ($I_{SG}$) of the monitoring unit (CSC) which said monitoring unit takes from the energy storage cell ($EZ_{m,z}$) during a waking phase, and
        - - a maximum cell voltage (U_modul_max,m) for the respective energy storage module ($EM_m$), wherein the maximum cell voltage (U_modul_max,m) is determined depending on the open-circuit voltages ($OCV_{m,z}$) of the respective energy storage cells ($EZ_{m,z}$) of the energy storage module ($EM_m$), and

    - driving the respective monitoring unit to discharge the respective energy storage cell ($EZ_{m,z}$) with the predefined symmetrical current (Is) for the discharge time duration (t_aktiv$_{m,z}$) assigned to the respective energy storage cell ($EZ_{m,z}$).

2. Method according to Claim 1, in which the gradient (C) is determined depending on a detected state of charge ($SOC_{m,z}$) of the energy storage cell ($EZ_{m,z}$).

3. Method according to Claim either of the preceding claims, in which the target discharge voltage value (U_global_min) is determined depending on the open-circuit voltages ($OCV_{m,z}$) detected for a predefined first number (Z) of energy storage cells ($EZ_{m,z}$).

4. Method according to one of the preceding claims, in which

    - in each case a minimum open-circuit voltage (OCV_modul_min,m) for the respective energy storage module ($EM_m$) is determined depending on the open-circuit voltages ($OCV_{m,z}$) of the respective energy storage cells ($EZ_{m,z}$) of said energy storage module ($EM_m$) and
    - a cell discharge voltage (U_modul_min,m) for the respective energy storage module ($EM_m$) is determined depending on the minimum open-circuit voltage (OCV_modul_min,m) of the respective energy storage module ($EM_m$) and
    - the target discharge voltage value (U_global_min) is determined depending on the determined cell discharge voltages (U_modul_min,m) of a second number (M) of energy storage modules ($EM_m$).

5. Method according to Claim 4, in which the cell discharge voltage (U_modul_min,m) for the respective energy storage module ($EM_m$) is determined depending on the maximum cell voltage (U_modul_max,m) of the energy storage module ($EM_m$).

6. Method according to Claim 4 or 5, in which the cell discharge voltage (U_modul_min,m) for the respective energy storage module ($EM_m$) is determined depending on a ratio of the symmetrical current (Is) to the operating current ($I_{SG}$).

7. Device for operating an energy store comprising at least one energy storage module ($EM_m$) which has a plurality of energy storage cells ($EZ_{m,z}$) which are each electrically coupled to a monitoring unit which is designed to discharge the energy storage cell ($EZ_{m,z}$) with a predefined symmetrical current (Is) in an active operating state of the monitoring unit, wherein the device is designed to carry out the method according to one of Claims 1 to 6.

**Revendications**

1. Procédé pour faire fonctionner un accumulateur d'énergie comprenant au moins un module d'accumulation d'énergie ($EM_m$), qui possède plusieurs cellules d'accumulation d'énergie ($EZ_{m,z}$), lesquelles sont respectivement connectées électriquement à une unité de surveillance (CSC) qui est configurée pour, dans un état de fonctionnement actif, décharger la cellule d'accumulation d'énergie ($EZ_{m,z}$) avec un courant symétrique ($I_S$) prédéfini, le procédé comprenant les étapes suivantes :

   - détection d'une tension de repos ($OCV_{m,z}$) de la cellule d'accumulation d'énergie ($EZ_{m,z}$) respective,
   - détermination d'une durée de décharge ($t\_aktiv_{m,z}$) pour la cellule d'accumulation d'énergie ($EZ_{m,z}$) respective en fonction

      - du courant symétrique ($I_S$) prédéfini,
      - de la tension de repos ($OCV_{m,z}$) de la cellule d'accumulation d'énergie ($EZ_{m,z}$),
      - d'une valeur de tension de décharge cible (U_global_min) prédéfinie pour l'accumulateur d'énergie,
      - d'une pente (C) prédéfinie d'une caractéristique de tension de repos (OCV_SOC) de la cellule d'accumulation d'énergie ($EZ_{m,z}$), la caractéristique de tension de repos (OCV_SOC) décrivant un tracé de la tension de repos ($OCV_{m,z}$) de la cellule d'accumulation d'énergie ($EZ_{m,z}$) en fonction d'un état de charge de la cellule d'accumulation d'énergie ($EZ_{m,z}$),
      - d'un courant de service ($I_{SG}$) de l'unité de surveillance (CSC) qu'elle soutire de la cellule d'accumulation d'énergie ($EZ_{m,z}$) pendant une phase de réveil, et
      - d'une tension de cellule maximale (U_modul_max,m) pour le module d'accumulation d'énergie ($EM_m$) respectif, la tension de cellule maximale (U_modul_max,m) étant déterminée en fonction des tensions de repos ($OCV_{m,z}$) des cellules d'accumulation d'énergie ($EZ_{m,z}$) respectives du module d'accumulation d'énergie ($EM_m$), et

   - commande de l'unité de surveillance respective pour décharger la cellule d'accumulation d'énergie ($EZ_{m,z}$) respective avec le courant symétrique (Is) prédéfini pendant la durée de décharge ($t\_aktiv_{m,z}$) associée à la cellule d'accumulation d'énergie ($EZ_{m,z}$) respective.

2. Procédé selon la revendication 1, avec lequel la pente (C) est déterminée en fonction d'un état de charge ($SOC_{m,z}$) détecté de la cellule d'accumulation d'énergie ($EZ_{m,z}$).

3. Procédé selon la revendication l'une des revendications précédentes, avec lequel la valeur de tension de décharge cible (U_global_min) est déterminée en fonction des tensions de repos ($OCV_{m,z}$) détectées pour un premier nombre (Z) prédéfini de cellules d'accumulation d'énergie ($EZ_{m,z}$).

4. Procédé selon l'une des revendications précédentes, avec lequel

   - une tension de repos minimale (OCV_modul_min,m) pour le module d'accumulation d'énergie ($EM_m$) respectif est déterminée en fonction des tensions de repos ($OCV_{m,z}$) des cellules d'accumulation d'énergie ($EZ_{m,z}$) respectives de ce module d'accumulation d'énergie ($EM_m$) et
   - une tension de décharge de cellule (U_modul_min,m) pour le module d'accumulation d'énergie ($EM_m$) respectif est déterminée en fonction de la tension de repos minimale (OCV_modul_min,m) du module d'accumulation d'énergie ($EM_m$) respectif et
   - la valeur de tension de décharge cible (U_global_min) est déterminée en fonction des tensions de décharge de cellule (U_modul_min,m) déterminées pour un deuxième nombre (M) de modules d'accumulation d'énergie ($EM_m$).

5. Procédé selon la revendication 4, avec lequel la tension de décharge de cellule (U_modul_min,m) pour le module d'accumulation d'énergie ($EM_m$) respectif est déterminée en fonction de la tension de cellule maximale (U_modul_max,m) du module d'accumulation d'énergie ($EM_m$).

6. Procédé selon la revendication 4 ou 5, avec lequel la tension de décharge de cellule (U_modul_min,m) pour le module d'accumulation d'énergie ($EM_m$) respectif est déterminée en fonction d'un rapport entre le courant symétrique

($I_S$) et le courant de service ($I_{SG}$).

7. Dispositif pour faire fonctionner un accumulateur d'énergie comprenant au moins un module d'accumulation d'énergie ($EM_m$), qui possède plusieurs cellules d'accumulation d'énergie ($EZ_{m,z}$), lesquelles sont respectivement connectées électriquement à une unité de surveillance qui est configurée pour, dans un état de fonctionnement actif de l'unité de surveillance, décharger la cellule d'accumulation d'énergie ($EZ_{m,z}$) avec un courant symétrique ($I_S$) prédéfini, le dispositif étant configuré pour mettre en œuvre le procédé selon l'une des revendications 1 à 6.

Figur 1

$EM_m$

$EZ_{m,k}$

$SOC_{m,k}$

Figur 2a

Figur 2b

Figur 3

Figur 3a

Figur 3b

Figur 3c

## Figur 4

## Figur 5

Figur 6

Figur 7

SOC_Nutzhub

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2254219 A1
- JP 2007244142 A
- JP 2004031254 A
- US 2002011820 A1